# EUROPÄISCHE PATENTSCHRIFT

(11) **EP 3 119 661 B1**
(45) Veröffentlichungstag und Bekanntmachung des Hinweises auf die Patenterteilung: **11.09.2019**
(21) Anmeldenummer: 15710206.2
(22) Anmeldetag: 18.03.2015
(51) Int. Cl.: B62D 1/181

(54) **LENKSÄULE FÜR EIN KRAFTFAHRZEUG, GEWINDESTANGE UND SPINDELMUTTER**
STEERING COLUMN FOR A MOTOR VEHICLE, THREADED ROD AND SPINDLE NUT
COLONNE DE DIRECTION POUR VÉHICULE AUTOMOBILE, TIGE FILETÉE ET ÉCROU D'ARBRE

(30) Priorität: 21.03.2014 DE 102014103879
(43) Veröffentlichungstag der Anmeldung: 25.01.2017
(73) Patentinhaber: ThyssenKrupp Presta AG, 9492 Eschen (LI); thyssenkrupp AG, 45143 Essen (DE)
(72) Erfinder: GALEHR, Robert, LI-9486 Schaanwald (LI)
(74) Vertreter: thyssenkrupp Intellectual Property GmbH
(86) Internationale Anmeldenummer: PCT/EP2015/055662
(87) Internationale Veröffentlichungsnummer: WO 2015/140205

(56) Entgegenhaltungen:
- EP-A2- 2 412 607
- WO-A1-2013/131608
- DE-A1- 1 814 356
- DE-A1- 3 421 467
- DE-A1- 3 636 315
- DE-A1- 10 003 619
- DE-U1- 9 017 035
- DE-U1-202010 000 305
- US-A1- 2009 308 189

## Beschreibung

### Technisches Gebiet

Die vorliegende Erfindung betrifft eine Lenksäule für ein Kraftfahrzeug, welche eine mit dem Chassis des Kraftfahrzeugs verbindbare Trageinheit und eine an dieser Trageinheit gehaltene und gegenüber der Trageinheit mittels eines Verstellantriebs verstellbare Stelleinheit aufweist. Die Erfindung betrifft weiterhin eine Gewindestange und eine Spindelmutter für einen Antrieb zur Verstellung einer solchen Lenksäule.

### Stand der Technik

Lenksäulen für Kraftfahrzeuge sind bekannt, welche eine mit dem Chassis des Kraftfahrzeugs verbindbare Trageinheit, beispielsweise in Form von Konsolenteilen, und eine an dieser Trageinheit gehaltene und gegenüber dieser Trageinheit verstellbare Stelleinheit umfassen. Die Stelleinheit lagert eine Lenkspindel, welche zum Einleiten einer Lenkbewegung von einem Lenkrad in ein Lenksystem zur Übertragung der Lenkbewegung auf ein lenkbares Rad dient.

Es ist bekannt, eine solche Stelleinheit gegenüber der Trageinheit mittels eines Verstellantriebs verstellbar auszulegen, um die Position eines an der Lenkspindel gehaltenen Lenkrades an die jeweilige Sitzposition eines Fahrers des Kraftfahrzeuges anpassen zu können. Dabei ist es bekannt, eine Verstellbarkeit der Stelleinheit in Achsenrichtung bezüglich der Lenkspindel bereitzustellen, um eine Längsverstellung der Lenksäule zu erreichen. Weiterhin ist es bekannt, eine Höhenverstellung des Lenkrades durch ein Verschwenken der Stelleinheit gegenüber der Trageinheit zu ermöglichen.

Bekannte Verstellantriebe umfassen Elektromotoren, mittels welchen eine komfortable Verstellung der Stelleinheit gegenüber der Trageinheit erreicht werden kann und welche auch das wiederholte Anfahren vorgespeicherter Positionen ermöglichen, insbesondere wenn mehrere Fahrer das Kraftfahrzeug bedienen.

Bei elektrisch verstellbaren Lenksäulen für Kraftfahrzeuge ist es notwendig, die Rotation einer Abtriebswelle eines Elektromotors in eine translatorische Verstellbewegung zum Verstellen der Stelleinheit gegenüber der Trageinheit zu erreichen. Dies erfolgt üblicherweise durch einen Gewindestangenantrieb, welcher eine auf dem Abtrieb des Elektromotors angeordnete Schneckenwelle sowie eine Spindelmutter umfasst, die an ihrer Außenseite als Schneckenrad ausgebildet ist, in dessen Verzahnung die auf der Abtriebswelle des Elektromotors angeordnete Schneckenwelle eingreift. Durch Rotation der ortsfesten Spindelmutter wird die Gewindestange axial bewegt.

Aus der gattungsgemäßen AT 511962 A4 ist eine Lenksäule für ein Kraftfahrzeug bekannt, bei welcher sowohl eine Verschiebung der Lenkspindel als auch eine Verschwenkung der Lenkspindel gegenüber einer Trageinheit vorgenommen werden kann, um eine entsprechende Positionierung des an der Lenkspindel gehaltenen Lenkrades zu erreichen. Beide Verstellbewegungen, also sowohl die Verschiebung als auch die Verschwenkung, werden über jeweils einen Spindelantrieb erreicht. Die Spindelantriebe umfassen jeweils eine Gewindestange, welche über eine Spindelmutter an einer der beiden gegeneinander verstellbaren Einheiten gehalten ist. Die Spindelmutter ist ortsfest gelagert und kann über einen Antriebsmotor mit einer Schneckenwelle, welche auf eine Außenverzahnung der Spindelmutter wirkt, rotiert werden, um über ein Innengewinde, welches mit der Gewindestange eingreift, entsprechend eine Translationsbewegung der Gewindestange bezüglich der Spindelmutter in Richtung der Gewindespindelachse zu erreichen. Durch die Translationsbewegung der Gewindestange wird die Verstellbewegung der Stelleinheit bewirkt.

Es ist bekannt, für das Außengewinde der Gewindestange und für das Innengewinde der Spindelmutter ein metrisches ISO-Regelgewinde zu verwenden, welches einen Flankenwinkel von 60° aufweist. Aus der DE 36 36 315 A1 ist eine axial verstellbare Lenksäule für ein Kraftfahrzeug bekannt, bei welcher für das Außengewinde der Gewindestange ein solches Gewinde gezeigt ist. Bei Verwendung eines ISO-Regelgewindes werden durch den relativ flachen Flankenwinkel von 60° hohe Kräfte in die Gewindeflanken eingeleitet, welche zu einer Aufspreizung der Spindelmutter beziehungsweise zu einer Kompression der Gewindestange führen können und auf diese Weise das Antriebsverhalten des Verstellantriebs nachteilig beeinflussen können.

Weiterhin ist es beispielsweise aus der EP 2 412 607 A2 bekannt, das Gewinde eines Verstellantriebs als Trapezgewinde auszuführen, beispielsweise als ISO-Trapezgewinde, welches einen Flankenwinkel von 30° aufweist.

Bei Verwendung eines ISO-Trapezgewindes wird es als nachteilig abgesehen, dass die jeweiligen Gewindegänge eine hohe Gangdicke aufweisen, wodurch ein relativ großer Außendurchmesser der jeweiligen Baugruppe entsteht.

### Darstellung der Erfindung

Ausgehend von dem bekannten Stand der Technik ist es eine Aufgabe der vorliegenden Erfindung, eine Lenksäule für ein Kraftfahrzeug mit einem Verstellantrieb, sowie eine Gewindestange und eine Spindelmutter für einen Verstellantrieb anzugeben, welche ein verbessertes Antriebsverhalten des Verstellantriebs bereit stellen.

Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.

Entsprechend wird eine Lenksäule für ein Kraftfahrzeug vorgeschlagen, umfassend eine mit dem Chassis des Kraftfahrzeugs verbindbare Trageinheit und eine an dieser gehaltene Stelleinheit, welche eine Lenkspindel zum Übertragen eines Lenkmoments von einem Lenkrad auf ein lenkbares Rad lagert, wobei die Position der Stelleinheit gegenüber der Trageinheit mittels eines Verstellantriebs verstellbar ist, wobei der Verstellantrieb eine Gewindestange mit einem Außengewinde aufweist, welches mit einem Innengewinde einer Spindelmutter des Verstellantriebs in Eingriff steht. Erfindungsgemäß weist das Außengewinde der Gewindestange und/oder das Innengewinde der Spindelmutter einen Flankenwinkel zwischen 35° und 55° auf.

Bevorzugt kann die Lenkspindel die Lenkbewegung von dem Lenkrad unter Zwischenschaltung eines Lenkgetriebes und besonders unter Einsatz einer Hilfskraftunterstützung auf das lenkbare Rad übertragen.

Es ist aber auch möglich, dass die Lenkbewegung von der Lenkspindel sensorisch, beispielsweise elektrisch, elektronisch oder magnetisch, abgetastet wird und die abgetasteten Signale in eine Steuerung eingespeist werden, die über eine Einrichtung eine Verschwenkung des lenkbaren Rades zur Darstellung der Lenkbewegung ausführt. Derartige Systeme sind als Steer-by-wire bekannt.

Dadurch, dass das Außengewinde der Gewindestange und/oder das Innengewinde der Spindelmutter einen Flankenwinkel von 35°bis 55° aufweist, ist es möglich, ein Aufspreizen der Spindelmutter im Betrieb zu reduzieren oder ganz zu verhindern, so dass entsprechend das Antriebsverhalten des Verstellantriebs verbessert werden kann.

Weiterhin ist es auf diese Weise möglich, einen möglichst kleinen Gewindenenndurchmesser bei einem großen Gewindekerndurchmesser zu erreichen, da aufgrund des reduzierten oder ganz fehlenden Aufspreizens der Spindelmutter auch mit einer geringen Flankenhöhe des Gewindes die zur Verstellung notwendigen Kräfte übertragen werden können. Auch auf diese Weise können die Betriebseigenschaften des Verstellantriebs verbessert werden, da Verformungen im Material der Gewindestange und/oder der Spindelmutter reduziert oder ganz vermieden werden können. Hierdurch kann ein zuverlässiger Betrieb einer elektrisch verstellbaren Lenksäule über den Verstellantrieb erreicht werden. Weiterhin lässt sich so die Geräuschkulisse reduzieren.

Bevorzugt liegt der Flankenwinkel zwischen 40° und 50°, um die Spindelmutter aufspreizende Kraftkomponenten möglichst klein zu halten, gleichzeitig aber ein einfaches Herstellen des jeweiligen Gewindes, beispielsweise durch Schneiden, zu ermöglichen.

Entsprechend ist das Außengewinde und/oder das Innengewinde bevorzugt als geschnittenes Gewinde ausgebildet. Durch die Möglichkeit des Schneidens des Gewindes ist es möglich, auf unterschiedliche Materialien für die Gewindestange und die Spindelmutter zurückzugreifen. Eine solche relativ freie Materialwahl ermöglicht es, das Außengewinde der Gewindestange und/oder das Innengewinde der Spindelmutter in ein Kunststoffmaterial zu schneiden, beispielsweise auch in ein Kunststoffmaterial, welches eine Faserverstärkung aufweist.

Die Ausprägung des Flankenwinkels von 35° bis 55° ermöglicht es daher aufgrund der geringeren Aufspreizneigung weiterhin, die Spindelmutter vollständig aus einem Kunststoffmaterial herzustellen, um auf diese Weise ein verbessertes Betriebsverhalten des Verstellantriebs, insbesondere im Hinblick auf sein Vibrations- und/oder Schwingungsverhalten, sowie im Bezug auf das tribologische Langzeitverhalten, zu erreichen.

Alternativ und bevorzugt ist das Gewinde beim Formen der Spindel direkt gespritzt oder geformt. Gleiches gilt auch für die Spindelmutter.

Bevorzugt weist das Außengewinde und/oder das Innengewinde mindestens zwei Gewindegänge auf. Dabei ist die Ausbildung von einem genau zweigängigen Gewinde besonders zu bevorzugen. Allerdings können auch genau dreigängig oder genau viergängig ausgebildete Gewinde von Vorteil sein. Durch die Ausbildung als mehrgängiges Gewinde kann eine effizientere, schnellere und sicherere Positionierung der Stelleinheit erreicht werden. Allerdings muss die Motorleistung der entsprechend schnelleren Verstellgeschwindigkeit angepasst sein.

Eine einfache Herstellbarkeit und ein drehrichtungsneutrales Betriebsverhalten des Verstellantriebs ergibt sich bevorzugt, wenn das Außengewinde und/oder das Innengewinde flankenzentriert ausgebildet ist.

Das Vibrationsverhalten, das tribologische Verhalten und/oder das Dämpfungsverhalten des Verstellantriebs wird erfindungsgemäß eingestellt, wenn die Gewindestange und die Spindelmutter zueinander verschiedene Materialien aufweisen.

In diesem Zusammenhang weist in der erfindungsgemäßen Ausgestaltung die Spindelmutter ein Kunststoffmaterial auf, bevorzugt aus einem Kunststoffmaterial, welches eine Faserverstärkung aufweist. Dabei kann die Faserverstärkung auch nur im Zentrum der Gewindespindel ausgebildet sein, um eine hohe Steifigkeit der Übertragung zu gewährleisten, aber gleichzeitig ein einfaches Einbringen des Gewindes zu ermöglichen, ohne dabei die Fasern aufzubrechen und damit die tribologischen Eigenschaften zu verschlechtern. Insbesondere können Glasfasern, Kohlenstofffasern oder auch Aramitfasern eingesetzt sein.

Die oben beschriebene Aufgabe wird weiterhin durch eine Spindelmutter mit den Merkmalen des Anspruchs 7 gelöst.

Entsprechend wird eine Spindelmutter für einen Verstellantrieb zum Verstellen der Position einer Stelleinheit gegenüber einer Trageinheit einer Lenksäule für ein Kraftfahrzeug vorgeschlagen, umfassend ein Innengewinde zum Eingreifen in ein Außengewinde einer Gewindestange.

Erfindungsgemäß weisen die Gewindestange und die Spindelmutter voneinander verschiedene Materialien auf, wobei die Spindelmutter ein Kunststoffmaterial aufweist, und das Innengewinde einen Flankenwinkel zwischen 35° und 55° aufweist. In einer bevorzugten Weiterbildung liegt der Flankenwinkel zwischen 40° und 50°.

Die Gewindestange und die Spindelmutter können bevorzugt auch durch die Merkmale der vom Anspruch 1 abhängigen Unteransprüche 2 - 6 weitergebildet werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
Figur 1 eine schematische perspektivische Darstellung einer Lenksäule mit einer elektrischen Verstellung;
Figur 2 die Lenksäule aus Figur 1 in einer schematischen Seitenansicht;
Figur 3 die Lenksäule aus Figur 1 in einer weiteren schematischen Seitenansicht;
Figur 4 ein Verstellantrieb für eine Lenksäule gemäß den vorgenannten Figuren in einer auseinandergezogenen Darstellung;
Figur 5 eine schematische Schnittdarstellung durch eine Gewindestange und eine Spindelmutter eines Verstellantriebs; und
Figur 6 eine Detailansicht eines Abschnitts des Verstellantriebs aus Figur 5.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

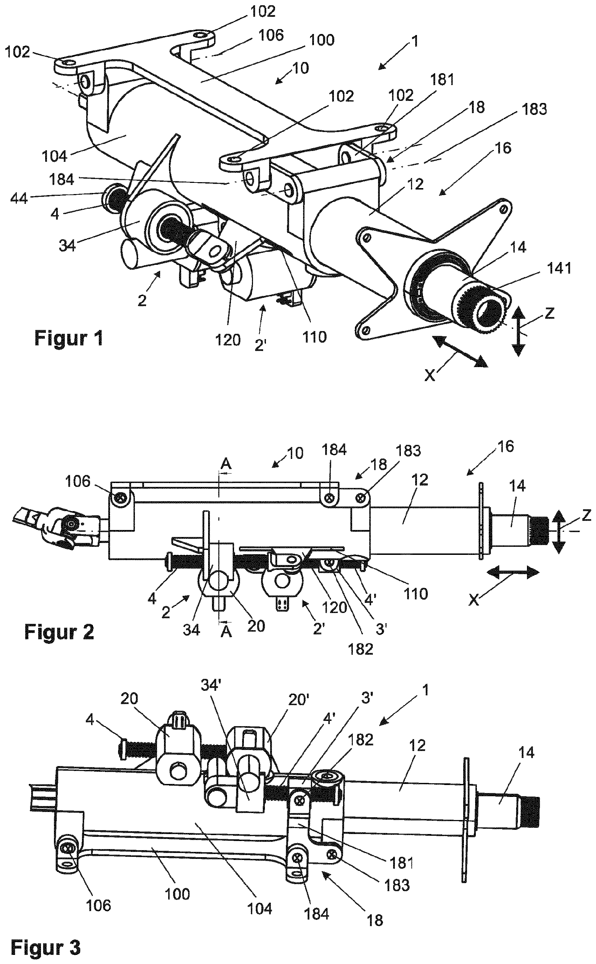

Figur 1 zeigt eine Lenksäule 1, welche eine mit dem Chassis eines hier nicht gezeigten Kraftfahrzeugs verbindbare Trageinheit 10 aufweist, an welcher eine Stelleinheit 16 verstellbar gehalten ist. Die Trageinheit 10 umfasst eine Konsole 100, welche am Chassis des Kraftfahrzeugs, beispielsweise über Befestigungsbohrungen 102, befestigt werden kann.

Die Stelleinheit 16 umfasst ein Mantelrohr 12, in welchem eine Lenkspindel 14 drehbar gelagert ist. Am lenkradseitigen Ende 141 der Lenkspindel 14 kann ein hier nicht gezeigtes Lenkrad befestigt werden. Die Lenkspindel 14 dient dazu, ein von einem Fahrer über das Lenkrad auf die Lenkspindel 14 eingebrachtes Lenkmoment in bekannter Weise auf ein hier nicht gezeigtes lenkbares Rad zu übertragen. Die Lenkspindel 14 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 14 auch sensorisch, beispielsweise elektrisch, elektronisch oder magnetisch, abgetastet werden und in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-wire bekannt.

Das Mantelrohr 12 ist in einem Tragrohr 104 in einer Längsverstellrichtung X verschiebbar gehalten, wobei sich die Längsverstellrichtung X in Achsenrichtung der Lenkspindel 14 erstreckt. Durch eine Verstellung des Mantelrohrs 12 gegenüber dem Tragrohr 104 kann entsprechend eine Längsverstellung der Lenkspindel 14 und damit des nicht dargestellten Lenkrades zur Anpassung der Position des Lenkrades an die Sitzposition eines Fahrers des Kraftfahrzeugs erreicht werden.

Das Tragrohr 104 ist verschwenkbar an der Konsole 100 befestigt und kann um eine Schwenkachse 106 gegenüber der Konsole 100 verschwenkt werden. Eine Verstellbarkeit der Stelleinheit 16 in einer Höhenverstellrichtung Z, die im Wesentlichen senkrecht zur Längsverstellrichtung X orientiert ist, wird darüber ermöglicht, dass das Mantelrohr 12 über einen Verschwenkmechanismus 18 an der Konsole 100 gehalten ist. Damit ergibt sich eine Verschwenkbarkeit des Mantelrohrs 12 und der Lenkspindel 14 gegenüber der Trageinheit 10 und insbesondere gegenüber der Konsole 100 um die Schwenkachse 106 derart, dass auch eine Höhenverstellung des hier nicht gezeigten und an der Lenkspindel 14 angeordneten Lenkrades erreicht wird, um auch auf diese Weise eine Anpassung der Position des Lenkrades an die Sitzposition des Fahrers zu erreichen.

Im Ausführungsbeispiel ist für jede der beiden Verstellrichtungen ein separater Verstellantrieb 2, 2' mit jeweils einem separatem Verstellgetriebe, umfassend eine Gewindestange 4, 4 , sowie eine Spindelmutter 3.

Ein Verstellantrieb 2 ist vorgesehen, mittels welchem eine Verstellung der Stelleinheit 16 gegenüber der Trageinheit 10 in Längsverstellrichtung X erreicht werden kann. Der Verstellantrieb 2 umfasst eine Gewindestange 4, welche über einen Anlenkhebel 120 mit dem Mantelrohr 12 verbunden ist. Der Anlenkhebel 120 ist in einem Schlitz 110 in dem Tragrohr 104 so verschiebbar geführt, dass eine Verschiebung des Anlenkhebels 120 gegenüber dem Tragrohr 104 zu einer Verschiebung der Stelleinheit 16 gegenüber der Trageinheit 10 führt.

Die Gewindestange 4 ist an dem Anlenkhebel 120 gehalten und erstreckt sich in Längsverstellrichtung X. Die Gewindestange 4 ist auch in einer Spindelmutter 3 gehalten, welche ein Innengewinde 32 aufweist, das mit dem Außengewinde der Gewindestange 4 in Eingriff steht. Die Spindelmutter 3 ist drehbar aber ortsfest bezüglich des Tragrohrs 104 in einem Getriebegehäuse 34 gelagert, so dass eine Drehung der Spindelmutter 3 wegen des Gewindeeingriffs mit der Gewindestange 4 zu einer Axialbewegung der Gewindestange relativ zur Spindelmutter 3 führt. Mit anderen Worten findet durch eine Drehung der Spindelmutter 3 eine Relativbewegung zwischen Mantelrohr 12 und Tragrohr 104 so statt, dass eine Verstellung der Position der Stelleinheit 16 gegenüber der Trageinheit 10 durch die Drehung der Spindelmutter 3 bewirkt wird.

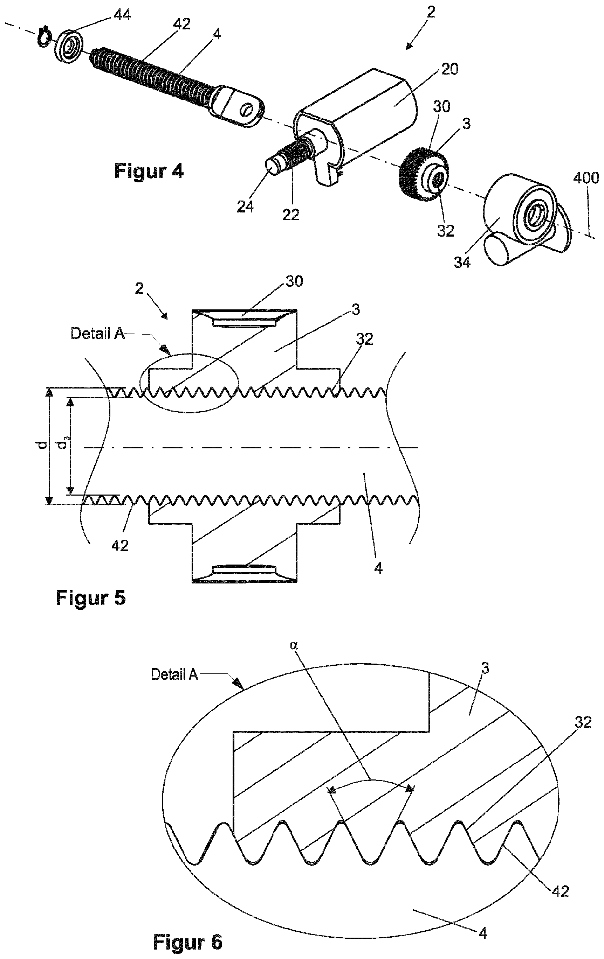

Der Verstellantrieb 2 umfasst weiterhin einen Antriebsmotor 20, auf dessen Abtriebswelle 24 eine in Figur 4 gut zu erkennende Schneckenwelle 22 angeordnet ist. Die Schneckenwelle 22 greift in eine Außenverzahnung 30 der Spindelmutter 3 ein, wobei die Außenverzahnung 30 als Schneckenrad ausgebildet ist. Die Rotationsachse der Schneckenwelle 22 und die Rotationsachse der Spindelmutter 3 stehen senkrecht aufeinander, wie es bei einem Schneckengetriebe an sich bekannt ist.

Entsprechend kann durch eine Rotation der Abtriebswelle 24 des Antriebsmotors 20 die Spindelmutter 3 rotiert werden, wodurch eine Längsverstellung in Längsverstellrichtung X der Stelleinheit 16 gegenüber dem Tragrohr 104 und damit eine Verschiebung der Stelleinheit 16 gegenüber der Trageinheit 10 stattfindet.

Ein entsprechender Verstellantrieb 2' ist besonders gut in Figur 3 zu erkennen. Dieser weitere Verstellantrieb 2' weist im Prinzip den gleichen Aufbau, wie der erste Verstellantrieb 2 auf. Der weitere Verstellantrieb 2' treibt eine Verstellbewegung der Stelleinheit 16 in Höhenverstellrichtung Z an. Über die Verdrehung einer Gewindestange 4' wird eine Spindelmutter 3' in Axialrichtung verschoben. Die Spindelmutter 3' ist über ein Gelenk 182 mit einem Stellhebel 181 verbunden. Der Stellhebel 181 ist verschwenkbar in einer Gelenkachse 183 am Tragrohr 104 und in einer Gelenkachse 184 an der Konsole 100 gehalten. Dadurch wird erreicht, dass über die Gewindestange 4' die Spindelmutter 3' eine entsprechende Verstellung auf den Verschwenkmechanismus 18 und damit auf die Stelleinheit 16 und das Tragrohr 104 aufbringt. Für einen erforderlichen Längenausgleich ist in einem der Gelenke eine entsprechende Ausgleichsfunktion integriert. Im Beispiel ist dies durch eine Langlochaufnahme eines die Schwenkachse 106 bildenden Bolzens in der Konsole dargestellt.

In Figur 4 ist der Verstellantrieb 2 noch einmal in einer schematischen, perspektivischen und auseinandergezogenen Ansicht gezeigt. Der Antriebsmotor 20 mit der Abtriebswelle 24, auf welcher die Schneckenwelle 22 ausgebildet ist, ist zu erkennen. Die Schneckenwelle 22 steht mit der als Schneckenrad ausgebildeten Außenverzahnung 30 der Spindelmutter 3 im Eingriff. Die Spindelmutter 3 ist im Getriebegehäuse 34 ortsfest und um die Achse 400 der Gewindestange 4 drehbar gehalten. Die Spindelmutter 3 ist dabei in Richtung der Achse 400 der Gewindestange 4 relativ zum Tragrohr 104 nicht verschiebbar gelagert. Die Gewindestange 4 steht mit ihrem Außengewinde 42 in Eingriff mit dem Innengewinde 32 der Spindelmutter 3. Das Getriebegehäuse 34 sorgt entsprechend dafür, dass durch eine Drehung der Spindelmutter 3 die mit dieser in Eingriff stehende Gewindestange 4 in Richtung der Achse 400 der Gewindestange 4 verschoben werden kann.

Bevorzugt kann die Spindelmutter 3 und/oder die Gewindestange 4 einen nicht-faserverstärkten Kunststoff aufweisen oder vollständig daraus bestehen, wie beispielsweise POM (Polyoxymethylen), POM Homopolymere, DELRIN© 100 NC 010 und/oder DELRIN© 100 AL NC 010. Die Spindelmutter 3 und/oder die Gewindestange 4 kann bevorzugt auch einen faserverstärkten Kunststoff aufweisen beziehungsweise vollständig aus einem faserverstärkten Kunststoff bestehen, beispielsweise POM mit Karbonfaser und/oder PBT (Polybutylenterephthalat) mit Karbonfaser (=Kohlenstofffasern).

Besonders bevorzugt sind dem Kunststoffmaterial Gleitadditive zugesetzt, um eine Selbstschmierung des Innengewindes 32 der Spindelmutter 3 mit dem Außengewinde 42 der Gewindestange 4 so zu ermöglichen, dass ein besonders reibungsloser und geräuscharmer Betrieb ermöglicht wird und die tribologischen Eigenschaften über die Lebensdauer des Antriebs 2 hinweg im Wesentlichen gleich gehalten werden.

In den Figuren 5 und 6 ist ein Abschnitt des Verstellantriebs 2 gezeigt, in welchem insbesondere die Gewindestange 4 und die Spindelmutter 3 zu sehen sind. Wie bereits genannt, weist die Gewindestange 4 ein Außengewinde 42 auf. Das Außengewinde 42 ist in dem gezeigten Ausführungsbeispiel eingängig ausgebildet.

Die Spindelmutter 3 weist ein zu dem Außengewinde 42 der Gewindestange 4 komplementäres Innengewinde 32 auf, welches im Eingriff mit dem Außengewinde 42 der Gewindestange 4 steht.

Wie sich aus der Detaildarstellung in Figur 6 ergibt, ist der Flankenwinkel α des Außengewindes 42 der Gewindestange 4 relativ klein ausgebildet und liegt im gezeigten Ausführungsbeispiel bei etwas unter 55°.

Der bevorzugte Winkelbereich für den Flankenwinkel α liegt zwischen 35° und 55°. Auf diese Weise kann bei einer Rotation der Spindelmutter 3 um die Gewindestange 4 herum die Kraftkomponente, welche die Spindelmutter 3 aufspreizt, gegenüber den aus dem Stand der Technik bekannten Gewindeformen reduziert werden. Hierdurch wird das Betriebsverhalten des Verstellantriebs 2 gegenüber den aus dem Stand der Technik bekannten Lösungen verbessert.

Weiterhin ist es möglich, die Spindelmutter 3 aus anderen Materialien beziehungsweise Werkstoffen, als den aus dem Stand der Technik bekannten Werkstoffen, herzustellen. Insbesondere kann die Spindelmutter 3 auch aus einem Kunststoffmaterial hergestellt werden, welches gegenüber den herkömmlichen Materialien verbesserte tribologische Eigenschaften, Dämpfungseigenschaften und Vibrationseigenschaften aufweisen kann, so dass das Betriebsverhalten des Verstellantriebs 2 weiter verbessert werden kann.

Das Außengewinde 42 der Gewindestange 4 kann in das Material der Gewindestange 4 geschnitten sein. Hierdurch ergibt sich, dass das Außengewinde 42 auf eine einfache Weise in unterschiedlichste Materialien eingebracht werden kann, so dass entsprechend eine größere Freiheit in der Werkstoffwahl besteht.

Durch den gewählten Flankenwinkel α wird auch das Herstellen feinerer Gewindegänge ermöglicht, so dass eine einfachere Herstellbarkeit sowohl der Gewindestange 4 als auch der Spindelmutter 3 erreicht werden kann.

Besonders bevorzugt ist auch das Außengewinde 42 der Gewindestange 4 in ein Kunststoffmaterial geschnitten und die Gewindestange 4 entsprechend entweder vollständig aus einem Kunststoffmaterial hergestellt, oder aber ein Kunststoffmaterial umhüllt eine aus einem anderen Werkstoff - beispielsweise einem Metall - bestehende Spindel zur Ausbildung des Außengewindes 42.

Das Innengewinde 32 der Spindelmutter 3 weist bevorzugt eine zu dem Außengewinde 42 der Gewindestange 4 komplementäre Geometrie auf. Entsprechend hat im gezeigten Ausführungsbeispiel auch das Innengewinde 32 der Spindelmutter 3 einen Flankenwinkel α von etwas unter 55°. Der bevorzugte Bereich der Flankenwinkel liegt hier, genauso wie für das Außengewinde 42 der Gewindestange 4, zwischen 35° und 55°, besonders bevorzugt zwischen 40° und 50°.

Der Nenndurchmesser d der Gewindestange 4 kann über die Wahl des genannten Flankenwinkels α, der zwischen 35° und 55°, besonders bevorzugt zwischen 40° und 50°, liegt, reduziert werden. Insbesondere kann auch der Kerndurchmesser d₃ vergrößert werden, da aufgrund der steileren Flanken eine bessere Kraftübertragung stattfindet und eine Verformung der Spindelmutter 3 beziehungsweise ein Aufspreizen der Spindelmutter 3 reduziert ist gegenüber den aus dem Stand der Technik bekannten Gewindegeometrien. Entsprechend kann die gleiche Kraft mittels eines Gewindegangs übertragen werden, welcher eine geringere Höhe aufweist, als die aus dem Stand der Technik bekannten Gewindegänge. Damit kann der Kerndurchmesser d₃ gegenüber einer herkömmlichen, aus dem Stand der Technik bekannten Geometrie relativ vergrößert werden, so dass entweder die gesamte Gewindestange 4 in ihrem Nenndurchmesser d verringert werden kann, oder aber die Stabilität bei gegebenen Nenndurchmesser d erhöht ist.

Besonders bevorzugt wird ein flankenzentriertes Gewinde verwendet, so wie es in Figur 5 und Figur 6 gezeigt ist, um eine möglichst einfache Bearbeitbarkeit beziehungsweise Herstellung des Innengewindes 32 der Spindelmutter 3 sowie des Außengewindes 42 der Gewindestange 4 zu erreichen. Weiterhin kann durch ein entsprechend flankenzentriertes Gewinde ein identisches Antriebsverhalten beim Verstellen des Verstellantriebs 2 in beiden Rotationsrichtungen der Spindelmutter 3 erreicht werden.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Lenksäule
- 10: Trageinheit
- 12: Mantelrohr
- 14: Lenkspindel
- 141: lenkradseitiges Ende
- 16: Stelleinheit
- 18: Verschwenkmechanismus
- 100: Konsole
- 102: Befestigungsbohrung
- 104: Tragrohr
- 106: Schwenkachse
- 110: Schlitz
- 120: Anlenkhebel
- 181: Stellhebel
- 182: Gelenk
- 183: Gelenkachse
- 184: Gelenkachse
- 2: Verstellantrieb
- 2': Verstellantrieb
- 20: Antriebsmotor
- 20': Antriebsmotor
- 22: Schneckenwelle
- 24: Abtriebswelle
- 3: Spindelmutter
- 30: Außenverzahnung
- 32: Innengewinde
- 34: Getriebegehäuse
- 34': Getriebegehäuse
- 4: Gewindestange
- 4': Gewindestange
- 42: Außengewinde
- 44: Anschlag
- 400: Achse der Gewindestange
- α: Winkel
- X: Längsverstellrichtung
- Z: Höhenverstellrichtung
- d: Nenndurchmesser
- d₃: K

## Patentansprüche

1. Lenksäule (1) für ein Kraftfahrzeug, umfassend eine mit dem Chassis des Kraftfahrzeugs verbindbare Trageinheit (10) und eine an dieser gehaltene Stelleinheit (16), welche eine Lenkspindel (14) zum Übertragen eines Lenkmoments von einem Lenkrad auf ein lenkbares Rad lagert, wobei die Position der Stelleinheit (16) gegenüber der Trageinheit (10) mittels eines Verstellantriebs (2, 2') verstellbar ist, wobei der Verstellantrieb (2, 2') eine Gewindestange (4, 4') mit einem Außengewinde (42) aufweist, welches mit einem Innengewinde (32) einer Spindelmutter (3) des Verstellantriebs (2, 2') in Eingriff steht,
**dadurch gekennzeichnet, dass**
die Gewindestange (4) und die Spindelmutter (3) voneinander verschiedene Materialien aufweisen, wobei die Spindelmutter (3) ein Kunststoffmaterial aufweist, und das Außengewinde (42) der Gewindestange (4) und/oder das Innengewinde (32) der Spindelmutter (3) einen Flankenwinkel (α) zwischen 35° und 55° aufweist.

2. Lenksäule (1) gemäß Anspruch 1, **dadurch gekennzeichnet, dass** der Flankenwinkel (α) zwischen 40° und 50° liegt.

3. Lenksäule (1) gemäß Anspruch 1 oder 2, **dadurch gekennzeichnet, dass** das Außengewinde (42) und/oder das Innengewinde (32) mindestens zwei Gewindegänge aufweist.

4. Lenksäule (1) gemäß einem der vorstehenden Ansprüche, **dadurch gekennzeichnet, dass** das Außengewinde (42) und/oder das Innengewinde (32) flankenzentriert ausgebildet ist.

5. Lenksäule (1) gemäß einem der vorstehenden Ansprüche, **dadurch gekennzeichnet, dass** das Außengewinde (42) und/oder das Innengewinde (32) als geschnittenes Gewinde ausgebildet ist.

6. Lenksäule (1) gemäß Anspruch 1, **dadurch gekennzeichnet, dass** die Spindelmutter (3) aus einem Kunststoffmaterial, welches eine Faserverstärkung aufweist, gebildet ist.

7. Spindelmutter (3) für einen Verstellantrieb (2, 2') einer Lenksäule (1), umfassend ein Innengewinde (32) zum Eingreifen in ein Außengewinde (42) einer Gewindestange (4, 4'),
**dadurch gekennzeichnet, dass**
sie ein Kunststoffmaterial aufweist und das Innengewinde (32) einen Flankenwinkel (α) zwischen 35° und 55° aufweist.

## Claims

1. Steering column (1) for a motor vehicle, comprising a support unit (10) which is connectable to the chassis of the motor vehicle and comprising a positioning unit (16) which is held on said support unit and which serves for the mounting of a steering spindle (14) for transmitting a steering moment from a steering wheel to a steerable wheel, wherein the position of the positioning unit (16) relative to the support unit (10) is adjustable by way of an adjustment drive (2, 2'), wherein the adjustment drive (2, 2') comprises a threaded rod (4, 4') with an external thread (42) which engages with an internal thread (32) of a spindle nut (3) of the adjustment drive (2, 2'),
**characterized in that**
the threaded rod (4) and the spindle nut (3) comprise mutually different materials, wherein the spindle nut (3) comprises a plastics material, and the external thread (42) of the threaded rod (4) and/or the internal thread (32) of the spindle nut (3) comprises a flank angle (α) of between 35° and 55°.

2. Steering column (1) according to Claim 1, **characterized in that** the flank angle (α) lies between 40° and 50°.

3. Steering column (1) according to Claim 1 or 2, **characterized in that** the external thread (42) and/or the internal thread (32) comprises at least two thread flights.

4. Steering column (1) according to one of the preceding claims, **characterized in that** the external thread (42) and/or the internal thread (32) is of flank-centred design.

5. Steering column (1) according to one of the preceding claims, **characterized in that** the external thread (42) and/or the internal thread (32) is in the form of a cut thread.

6. Steering column (1) according to Claim 1, **characterized in that** the spindle nut (3) is formed from a plastics material which comprises a fibre reinforcement.

7. Spindle nut (3) for an adjustment drive (2, 2') of a steering column (1), comprising an internal thread (32) for engaging into an external thread (42) of a threaded rod (4, 4'),
**characterized in that**
said spindle nut comprises a plastics material and the internal thread (32) comprises a flank angle (α) of between 35° and 55°.

## Revendications

1. Colonne de direction (1) pour un véhicule automobile, comprenant une unité porteuse (10) pouvant être reliée au châssis du véhicule automobile et une unité d'actionnement (16) maintenue à celle-ci, laquelle supporte un arbre de direction (14) destiné à transmettre un couple de braquage d'un volant de direction à une roue orientable, la position de l'unité d'actionnement (16) par rapport à l'unité porteuse (10) pouvant être réglée au moyen d'un mécanisme de positionnement (2, 2'), le mécanisme de positionnement (2, 2') possédant une tige filetée (4, 4') pourvue d'un filetage mâle (42) qui est en prise avec un filetage femelle (32) d'un écrou de broche (3) du mécanisme de positionnement (2, 2'), **caractérisée en ce que**
la tige filetée (4) et l'écrou de broche (3) présentent des matériaux mutuellement différents, l'écrou de broche (3) présentant une matière plastique et le filetage mâle (42) de la tige filetée (4) et/ou le filetage femelle (32) de l'écrou de broche (3) présentant un angle de flanc (α) entre 35° et 55°.

2. Colonne de direction (1) selon la revendication 1, **caractérisée en ce que** l'angle de flanc (α) est compris entre 40° et 50°.

3. Colonne de direction (1) selon la revendication 1 ou 2, **caractérisée en ce que** le filetage mâle (42) et/ou le filetage femelle (32) possède au moins deux filets.

4. Colonne de direction (1) selon l'une des revendications précédentes, **caractérisée en ce que** le filetage mâle (42) et/ou le filetage femelle (32) est de configuration centrée sur le flanc.

5. Colonne de direction (1) selon l'une des revendications précédentes, **caractérisée en ce que** le filetage mâle (42) et/ou le filetage femelle (32) est réalisé sous la forme d'un filetage taillé.

6. Colonne de direction (1) selon la revendication 1, **caractérisée en ce que** l'écrou de broche (3) se compose d'une matière plastique qui possède un renforcement par fibres.

7. Écrou de broche (3) pour un mécanisme de positionnement (2, 2') d'une colonne de direction (1), comprenant un filetage femelle (32) destiné à venir en prise dans un filetage mâle (42) d'une tige filetée (4, 4'), **caractérisé en ce qu'**il présente une matière plastique et le filetage femelle (32) présente un angle de flanc (α) entre 35° et 55°.
